# EUROPÄISCHE PATENTANMELDUNG

(11) **EP 4 186 680 A1**
(43) Veröffentlichungstag der Anmeldung: **31.05.2023**
(21) Anmeldenummer: 22209060.7
(22) Anmeldetag: 23.11.2022
(51) Int. Cl.: B29C 51/32

(54) **VORRICHTUNG UND VERFAHREN ZUM BEARBEITEN VON BAUTEILEN SOWIE BAUTEIL**

(30) Priorität: 25.11.2021 DE 102021213283
(71) Anmelder: FRIMO Group GmbH, 49504 Lotte (DE)
(72) Erfinder: Kovács, Zsolt, 8060 Székesfehérvár (HU)
(74) Vertreter: Hoffmann Eitle

(57) **Zusammenfassung**

Die Erfindung betrifft eine Vorrichtung zum Bearbeiten von Bauteilen (11), vorzugsweise Bauteile (11), die zumindest teilweise aus einem Kunststoffmaterial ausgebildet sind, aufweisend einen Formstempel (42) und eine Formmatrize (47), durch welche das dazwischen angeordnete Bauteil (11) in einem Umformbereich (U) unter Beaufschlagung durch den Formstempel (42) und der Formmatrize (47) umformbar ist, wobei eine Schneideinrichtung (28) mit wenigstens einem Schneidelement (43) vorgesehen ist, die eingerichtet ist, vor dem Ausbilden der Umformung ein Sekundärloch (52) innerhalb des Umformbereichs (U) in das Bauteil (11) einzubringen, sowie ein Verfahren zum Bearbeiten von Bauteilen (11) und ein Bauteil (11).

## Beschreibung

### Technisches Gebiet

Die Erfindung betrifft eine Vorrichtung zum Bearbeiten von Bauteilen, ein Verfahren zum Bearbeiten von Bauteilen sowie ein Bauteil.

### Stand der Technik

Es sind Bearbeitungseinrichtungen zum Umformen von Werkstücken, insbesondere plattenförmigen Werkstücken, bzw. Bauteilen bekannt, welche einen Formstempel, eine Formmatrize und einen Niederhalter umfassen. Diese sind zueinander korrespondierend ausgerichtet und einander gegenüberliegenden Seiten des zu bearbeitenden Werkstücks zugeordnet, wobei der Formstempel zum Umformen des Werkstücks eine Hubbewegung in Richtung der Formmatrize ausführt, wodurch das dazwischen angeordnete Werkstück unter Beaufschlagung durch den Formstempel und der Formmatrize umgeformt wird.

### Darstellung der Erfindung

Der Erfindung liegt die Aufgabe zugrunde, eine Vorrichtung zum Bearbeiten von Bauteilen bereitzustellen, durch welche eine präzise und qualitativ hochwertige Ausbildung einer Umformung in einem Bauteil ermöglicht ist.

Eine Vorrichtung zum Bearbeiten von Bauteilen ist in Anspruch 1 definiert. Ein Verfahren zum Bearbeiten von Bauteilen ist in Anspruch 12 definiert. Ein Bauteil ist in Anspruch 15 definiert. Unteransprüche beziehen sich auf bestimmte Ausführungsformen.

Die Aufgabe wird durch eine Vorrichtung zum Bearbeiten von Bauteilen, aufweisend einen Formstempel und eine Formmatrize, durch welche das dazwischen angeordnete Bauteil in einem Umformbereich unter Beaufschlagung durch den Formstempel und der Formmatrize umformbar ist, gelöst, wobei eine Schneideinrichtung mit wenigstens einem Schneidelement vorgesehen ist, die eingerichtet ist, vor dem Ausbilden der Umformung ein Sekundärloch innerhalb des Umformbereichs in das Bauteil einzubringen.

Indem durch die Schneideinrichtung vor dem Umformen des Bauteils das Sekundärloch innerhalb des Umformbereichs eingebracht wird, können Spannungen, die durch den Umformungsvorgang innerhalb des Bauteils entstehen und zu Faltenbildung oder Rissbildung führen können, reduziert bzw. vermieden werden. Auf diese Weise kann eine präzise und qualitativ hochwertige Umformung in das Bauteil eingebracht werden. Vorzugsweise sind die zu bearbeitenden Bauteile zumindest teilweise aus einem Kunststoffmaterial ausgebildet.

In einer bevorzugten Ausgestaltung der Vorrichtung kann vorgesehen sein, dass das Schneidelement zum Ausbilden des Sekundärlochs gegenüber einem Stempelboden des Formstempels oder gegenüber der Formmatrize in Richtung des zu bearbeitenden Bauteils hervorsteht.

Auf diese Weise kann das Sekundärloch aufgrund des dem Formstempel vorauseilenden Schneidelements durch die Hubbewegung bzw. während der Hubbewegung des Formstempels in das Bauteil eingebracht werden.

Eine weiter bevorzugte Ausgestaltung der Vorrichtung kann zudem vorsehen, dass zumindest das Schneidelement der Schneideinrichtung mit dem Formstempel oder der Formmatrize gekoppelt ist oder integral mit dem Formstempel oder der Formmatrize ausgebildet ist.

Dadurch kann eine konstruktiv einfache Ausgestaltung der Schneideinrichtung erreicht sein, bei welcher eine Schneidbewegung des Schneidelements simultan mit der Hubbewegung des Formstempels ausgeführt wird.

In einer vorteilhaften Weiterbildung der Vorrichtung kann vorgesehen sein, dass die Schneideinrichtung ein Gegenschneidelement aufweist, wobei das Gegenschneidelement und das Schneidelement zueinander ausgerichtet sind und jeweils einander gegenüberliegenden Seiten des zu bearbeitenden Bauteils zugeordnet sind und durch eine Stellbewegung relativ zueinander bewegbar sind, wodurch das Sekundärloch unter Beaufschlagung durch das Schneidelement und das Gegenschneidelement in das dazwischen angeordnete Bauteil einbringbar ist.

Durch das Zusammenwirken des Schneidelements und des Gegenschneidelements lässt sich eine einseitige Belastung und Verformung des Bauteils durch den Schneidvorgang vermeiden und somit ein präzises Sekundärloch in das Bauteil einbringen.

In einer Weiterbildung der Vorrichtung kann die Schneideinrichtung eine Stelleinrichtung umfassen, durch die eine Stellbewegung des Schneidelements und/oder des Gegenschneidelements in Richtung des zu bearbeitenden Bauteils ansteuerbar ist.

Die durch die Stelleinrichtung ansteuerbare Stellbewegung kann eine Relativbewegung des Schneidelements und/oder des Gegenschneidelements zum Formstempel und/oder zur Formmatrize sein. Die Stellbewegung kann eine gegenüber dem Formstempel oder der Formmatrize vorauseilende Schneidbewegung des Schneidelements und/oder eine Zustellbewegung des Gegenschneidelements in Richtung des Bauteils sein.

Eine besonders bevorzugte Ausgestaltung der Vorrichtung kann vorsehen, dass die Schneideinrichtung zumindest teilweise innerhalb des Formstempels und/oder der Formmatrize angeordnet ist.

Durch die Integration der Schneideinrichtung in den Formstempel und/oder der Formmatrize kann eine konstruktiv einfache und platzsparende Ausgestaltung der Schneideinrichtung ermöglicht sein.

In einer weiteren besonders bevorzugten Ausgestaltung der Vorrichtung kann zwischen einem Außenumfang des Formstempels und einem Innenumfang der Formmatrize ein radialer Abstand vorgesehen sein, durch welchen ein Formungsbereich zwischen dem Formstempel und der Formmatrize gebildet ist, in dem eine trichterförmige Umformung in dem Bauteil ausbildbar ist.

Der Formungsbereich kann in einer Draufsicht durch einen Spalt zwischen dem Formstempel und der Formmatrize gebildet sein. Der Spalt kann eine kreisförmige Ringfläche, eine ovale Ringfläche oder eine mehreckige Ringfläche bilden. Der Formstempel kann in der Weise zu der Formmatrize positioniert sein, dass die Ringfläche des Spalts konzentrisch oder exzentrisch zu einer Längsmittelachse der Formmatrize ausgebildet ist.

Vorteilhafterweise kann bei der Vorrichtung vorgesehen sein, dass der Stempelboden des Formstempels in Bezug zu einer Orthogonalen zu einer Längsmittelachse des Formstempels geneigt angeordnet ist.

Durch die Neigung des Stempelbodens kann eine asymmetrisch ausgebildete Umformung in das Bauteil eingeformt werden. Auf diese Weise kann die Umformung in Abhängigkeit von der Neigung des Stempelbodens an eine Außenkontur des Bauteils, beispielsweise einer Wölbung, Neigung oder Schräge des Bauteils, und/oder an eine auszubildende Geometrie der Umformung angepasst sein.

Zudem kann bei der Vorrichtung vorgesehen sein, dass eine Längsmittelachse des Formstempels und eine Längsmittelachse der Formmatrize versetzt zueinander und/oder geneigt zueinander ausgerichtet sind.

Eine solche Ausführungsform der Vorrichtung kann zu dem geneigten Stempelboden des Formstempels eine ergänzende oder alternative Ausgestaltung sein, um die asymmetrische Umformung in das Bauteil einzuformen.

Eine vorteilhafte Ausgestaltung der Vorrichtung kann zudem vorsehen, dass ein Hubweg der Hubbewegung des Formstempels und/oder der Formmatrize in Abhängigkeit von einer auszubildenden Geometrie der trichterförmigen Umformung angepasst ist.

Dabei kann vorgesehen sein, dass der Hubweg des Formstempels und/oder der Formmatrize größer eingestellt ist als zum Ausbilden der Geometrie der trichterförmigen Umformung erforderlich. Auf diese Weise kann eine Rückfederung des Materials nach dem Umformen ausgeglichen werden.

In einer Ausgestaltung der Vorrichtung kann vorgesehen sein, dass der Hubweg der Hubbewegung des Formstempels und/oder der Formmatrize eingerichtet ist, dass eine Eindringtiefe des Formstempels in die Formmatrize gleich oder geringer ist als eine Bauteildicke in dem Umformbereich des zu bearbeitenden Bauteils.

In einer bevorzugten Weiterbildung der Vorrichtung kann eine Stanzeinrichtung mit wenigstens einem Stanzmesser vorgesehen sein, die eingerichtet ist, nach dem Ausbilden der Umformung ein Primärloch innerhalb des Umformbereichs in das Bauteil einzubringen, wobei ein Stanzdurchmesser der Stanzeinrichtung größer ausgebildet ist als ein Schneiddurchmesser der Schneideinrichtung und kleiner ausgebildet ist als ein Formungsdurchmesser der Formmatrize.

Besonders bevorzugt kann der Stanzdurchmesser der Stanzeinrichtung größer ausgebildet sein als ein Außendurchmesser des Formstempels. Auf diese Weise kann durch das Einbringen des Primärlochs eine Stempelanlagefläche des Formstempels vollständig entfernbar sein.

Vorteilhafterweise kann die Stanzeinrichtung mit dem Stanzmesser und einer Stanzmatrize vorgesehen sein, die zueinander ausgerichtet sind und jeweils einander gegenüberliegenden Seiten des zu bearbeitenden Bauteils zugeordnet sind und die durch eine Hubbewegung des Stanzmessers und/oder der Stanzmatrize relativ zueinander bewegbar sind, wobei die Stanzeinrichtung eingerichtet ist, das Primärloch unter Beaufschlagung durch das Stanzmesser und die Stanzmatrize in das dazwischen angeordnete Bauteil einzubringen.

Zudem wird die Aufgabe durch ein Verfahren zum Bearbeiten von Bauteilen, vorzugsweise Bauteile, die zumindest teilweise aus einem Kunststoffmaterial ausgebildet sind, gelöst, wobei das Verfahren die Schritte aufweist:
- Erwärmen zumindest eines Umformbereichs des Bauteils auf eine Umformtemperatur,
- Einbringen eines Sekundärlochs innerhalb des Umformbereichs in das Bauteil,
- Ausbilden einer Umformung im Umformbereich, indem ein Formstempel und eine Formmatrize durch eine Hubbewegung relativ zueinander bewegt werden und ein Stempelboden des Formstempels nur auf eine das Sekundärloch zumindest bereichsweise umgebende Stempelanlagefläche aufgesetzt wird, und das dazwischen angeordnete Bauteil unter Beaufschlagung durch den Formstempel und die Formmatrize umgeformt wird,
- nach dem Umformen Einbringen eines Primärlochs in das Bauteil innerhalb des Umformbereichs, wobei ein Durchmesser des Primärlochs größer ausgebildet wird als ein Durchmesser des Sekundärlochs und kleiner als ein Formungsdurchmesser der Formmatrize.

Durch ein solches Verfahren kann eine präzise und qualitativ hochwertige Umformung in das Bauteil eingebracht werden. Durch das Einbringen des Sekundärlochs innerhalb des Umformbereichs vor dem Umformen des Bauteils, können durch den Umformvorgang entstehende Spannungen, die zu Faltenbildung oder Rissbildung im Bauteil führen können, reduziert bzw. vermieden werden. Durch das Einbringen des Primärlochs wird zumindest das eingebrachte Sekundärloch sowie die das Sekundärloch zumindest bereichsweise umgebende Stempelanlagefläche vom Bauteil entfernt.

Vorzugsweise wird das Primärloch mit einem Durchmesser in das Bauteil eingebracht, der größer ausgebildet wird als ein Außendurchmesser des Formstempels, wobei besonders bevorzugt durch das Einbringen des Primärlochs die Stempelanlagefläche des Formstempels vollständig entfernt wird.

In einer Weiterbildung des Verfahrens kann vorgesehen sein, dass die Umformung durch einen radialen Abstand zwischen dem Formstempel und der Formmatrize als eine trichterförmige Umformung in einem die Stempelanlagefläche umgebenden Formungsbereich ausgebildet wird.

Dadurch kann ein spaltförmiger Formungsbereich zwischen dem Formstempel und der Formmatrize ausgebildet werden. Der spaltförmige Formungsbereich kann als eine kreisförmige Ringfläche, eine ovale Ringfläche oder eine mehreckige Ringfläche ausgebildet werden. Die Ringfläche des Formungsbereichs kann durch eine entsprechende Positionierung des Formstempels zur Formmatrize konzentrisch oder exzentrisch zu einer Längsmittelachse der Formmatrize vorgesehen werden. Durch eine exzentrische Ausrichtung kann eine asymmetrische trichterförmige Umformung ausgebildet werden.

Eine vorteilhafte Ausgestaltung des Verfahrens kann zudem vorsehen, dass der Formstempel zum Ausbilden der Umformung mit einer Eindringtiefe in das Bauteil eingebracht wird, die in Abhängigkeit von einer auszubildenden Geometrie der trichterförmigen Umformung angepasst wird.

Dabei kann vorgesehen sein, dass der Formstempel zum Ausbilden der Umformung mit einer Eindringtiefe in das Bauteil eingebracht wird, die gleich oder geringer ist als eine Bauteildicke in dem Umformbereich des zu bearbeitenden Bauteils.

Durch die vorgesehene Eindringtiefe des Formstempels in das Bauteil kann die Umformung als eine Art Einformung in das Bauteil eingebracht werden, wodurch sich das offenbarungsgemäße Verfahren vom klassischen Tiefziehen eines Bauteils unterscheiden kann.

Die Aufgabe wird zudem durch ein Bauteil, vorzugsweise Bauteil, das zumindest teilweise aus einem Kunststoffmaterial ausgebildet ist, gelöst, wobei das Bauteil gemäß dem Verfahren nach einem der zuvor beschriebenen Ausführungsformen ausgebildet ist.

Bevorzugt handelt es sich bei dem Bauteil um ein Bauteil mit einem sich zumindest bereichsweise flächig erstreckenden Grundkörper. Das Bauteil kann eine größere Längserstreckung als Bauteildicke aufweisen. Insbesondere kann das Bauteil eine zumindest bereichsweise konkave oder konvexe Außenkontur aufweisen. Das Bauteil kann beispielsweise ein Stoßfänger oder ein anderes Karosserieelement für ein Kraftfahrzeug sein. Das Bauteil ist jedoch nicht auf ein Karosserieelement für ein Kraftfahrzeug beschränkt. Das Bauteil kann für einen beliebigen Einsatzbereich vorgesehen sein.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer Heizeinrichtung einer offenbarungsgemäßen Vorrichtung zum Bearbeiten von Bauteilen;
- Fig. 2: eine perspektivische Ansicht einer Umformeinrichtung der offenbarungsgemäßen Vorrichtung zum Bearbeiten von Bauteilen;
- Fig. 3: eine perspektivische Ansicht einer Stanzeinrichtung der offenbarungsgemäßen Vorrichtung zum Bearbeiten von Bauteilen;
- Fig. 4: eine schematische Schnittansicht eines Oberwerkzeugs und eines Unterwerkzeugs der Umformeinrichtung in Fig. 2;
- Fig. 5: eine schematische Schnittansicht der Stanzeinrichtung in Fig. 3;
- Fig. 6: eine schematische Darstellung eines Bauteils nach einem ersten Bearbeitungsschritt;
- Fig. 7: eine schematische Darstellung des Bauteils nach einem zweiten Bearbeitungsschritt;
- Fig. 8: eine schematische Darstellung des Bauteils nach einem dritten Bearbeitungsschritt;
- Fig. 9: eine schematische Darstellung des Bauteils nach einem vierten Bearbeitungsschritt;
- Fig. 10: eine schematische Darstellung einer Rückseite des Bauteils in Fig. 9;
- Fig. 11: eine schematische Darstellung eines Stoßfängers als eine exemplarische Ausführungsform eines zu bearbeitenden Bauteils;
- Fig. 12: eine schematische Detailansicht des Stoßfängers gemäß dem Detail A in Fig. 11;

### Beschreibung von Ausführungsformen

Gleiche Bezugszeichen, die in verschiedenen Figuren aufgeführt sind, benennen identische, einander entsprechende, oder funktionell ähnliche Elemente.

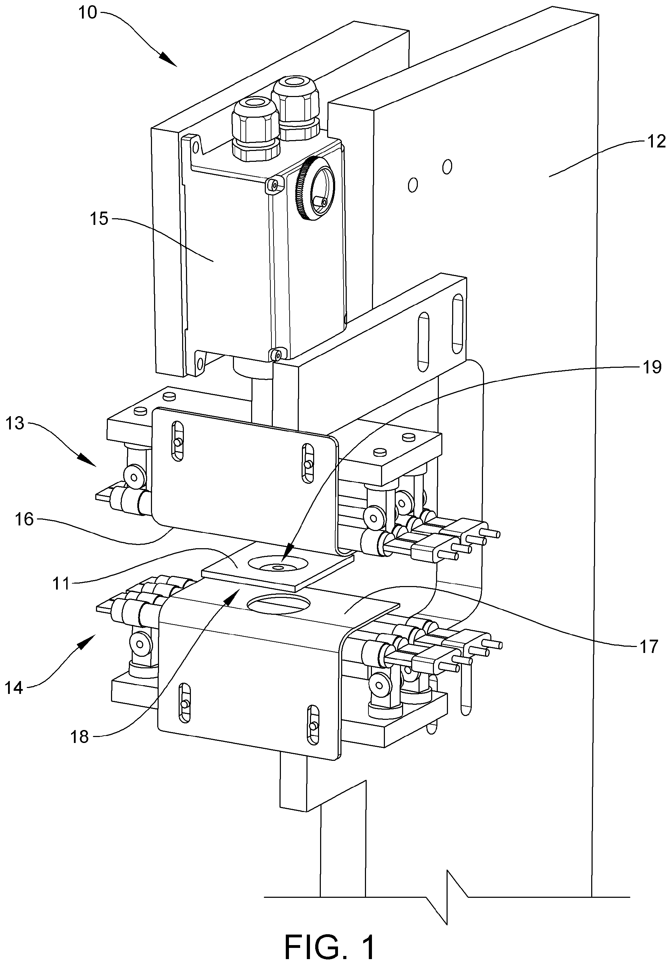

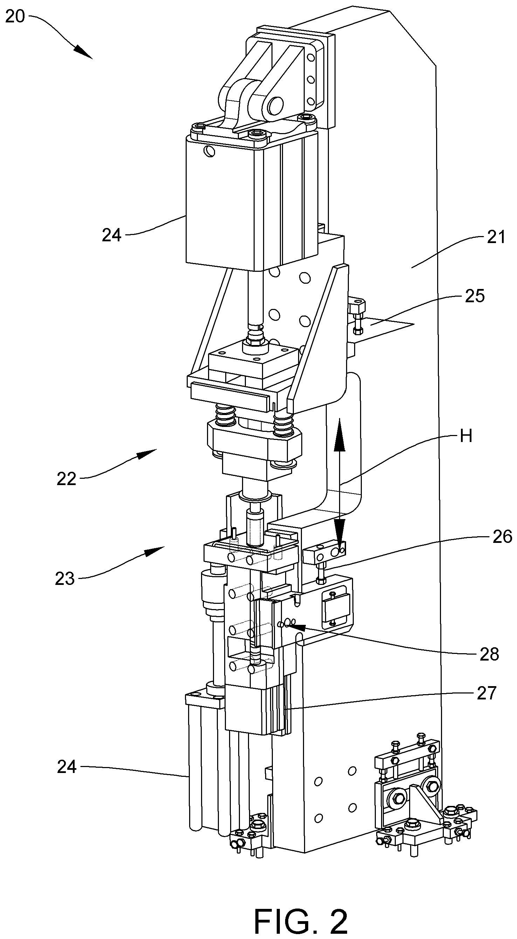

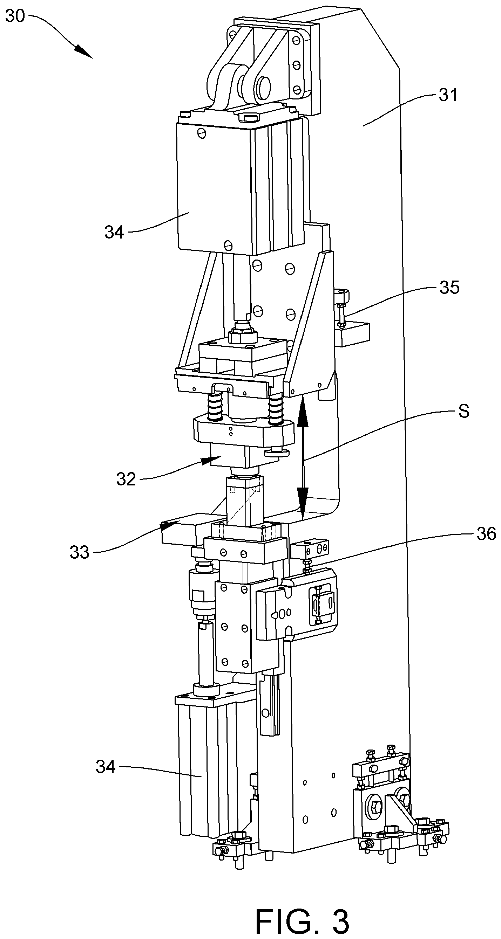

Fig. 1 zeigt eine perspektivische Ansicht einer Heizeinrichtung 10 einer offenbarungsgemäßen Vorrichtung zum Bearbeiten von Bauteilen 11. In Fig. 2 ist eine Umformeinrichtung 20 der offenbarungsgemäßen Vorrichtung zum Bearbeiten von Bauteilen 11 in einer perspektivischen Ansicht dargestellt. Fig. 3 ist eine perspektivische Ansicht einer Stanzeinrichtung 30 der offenbarungsgemäßen Vorrichtung zum Bearbeiten von Bauteilen 11.

Die in Fig. 1 dargestellte Heizeinrichtung 10, die in Fig. 2 dargestellte Umformeinrichtung 20 und die in Fig. 3 dargestellte Stanzeinrichtung 30 bilden jeweils Teileinheiten der offenbarungsgemäßen Vorrichtung zum Bearbeiten von Bauteilen 11 und sind in den Fig. 1 bis 3 zur vereinfachten Darstellung separat dargestellt.

Bevorzugt sind die Heizeinrichtung 10, die Umformeinrichtung 20 und die Stanzeinrichtung 30 zusammenhängend angeordnet, beispielsweise durch ein nicht näher dargestelltes gemeinsames Grundgestell, und bilden gemeinsam die offenbarungsgemäße Vorrichtung zum Bearbeiten von Bauteilen 11. Ebenso können die Heizeinrichtung 10, die Umformeinrichtung 20 und die Stanzeinrichtung 30 getrennt zueinander angeordnet sein.

Vorzugsweise sind die Heizeinrichtung 10, die Umformeinrichtung 20 und die Stanzeinrichtung 30 entlang einer Förderrichtung der zu bearbeitenden Bauteile 11 angeordnet. Zwischen der Heizeinrichtung 10, der Umformeinrichtung 20 und der Stanzeinrichtung 30 kann zum Fördern der Bauteile 11 eine nicht näher dargestellte Fördereinrichtung oder Übergabevorrichtung vorgesehen sein.

Ebenso kann vorgesehen sein, dass die Heizeinrichtung 10, und/oder die Umformeinrichtung 20 und/oder die Stanzeinrichtung 30 entlang der Förderrichtung der zu bearbeitenden Bauteile 11 gemeinsam mit den Bauteilen 11 bewegbar sind. Die Förderbewegung der Bauteile 11 und der Heizeinrichtung 10, und/oder Umformeinrichtung 20 und/oder Stanzeinrichtung 30 können gekoppelt sein. Die jeweilige Bearbeitung der Bauteile 11 kann während der Förderbewegung ausführbar sein.

Ebenso kann vorgesehen sein, dass das zu bearbeitende Bauteil 11 lagefixiert zu der Heizeinrichtung 10, und/oder Umformeinrichtung 20 und/oder Stanzeinrichtung 30 angeordnet ist und die Heizeinrichtung 10, die Umformeinrichtung 20 und/oder die Stanzeinrichtung 30 relativ zum Bauteil 11 bewegbar sind.

Die in Fig. 1 dargestellte Heizeinrichtung 10 umfasst einen Aufnahmerahmen 12, an dem ein oberes Heizelement 13 und ein unteres Heizelement 14 angeordnet sind. Ebenso kann die Heizeinrichtung 10 nur das obere Heizelement 13 oder nur das untere Heizelement 14 aufweisen. Der Aufnahmerahmen 13 ist durch einen C-förmigen Rahmen gebildet.

Die Heizelemente 13, 14 sind insbesondere als Infrarot-Heizelemente ausgebildet. Alternativ oder ergänzend kann die Heizeinrichtung 10 eine Heißlufteinrichtung aufweisen oder die Heizelemente 13, 14 als Heißluftheizung ausgebildet sein.

Durch die Heizeinrichtung 10 ist vorgesehen, dass das Bauteil 11 auf eine Umformtemperatur erwärmt wird. Bevorzugt ist durch die Heizeinrichtung 10 vorgesehen, dass eine Rückseite 18 des Bauteils 11 erwärmt wird. Ebenso kann vorgesehen sein, dass durch die Heizeinrichtung 10 die Rückseite 18 und eine Vorderseite 19 des Bauteils 11 erwärmt werden.

Zwischen dem oberen Heizelement 13 und dem unteren Heizelement 14 ist ein Erwärmungsbereich gebildet, in dem das zu bearbeitende Bauteil 11 zum Erwärmen angeordnet wird.

Der Erwärmungsbereich ist zu dem oberen Heizelement 13 durch ein oberes Schattenblech 16 und zu dem unteren Heizelement 14 durch ein unteres Schattenblech 17 begrenzt. Durch die Schattenbleche 16, 17 kann eine gleichmäßigere Temperaturverteilung zum Erwärmen des Bauteils 11 in dem Erwärmungsbereich ausgebildet werden.

Alternativ oder ergänzend kann das obere Heizelement 13 und/oder das untere Heizelement 14 in der Weise ausgebildet sein, dass dieses einen kreisförmigen oder ringförmigen Erwärmungsbereich bildet. Diese Ausführungsform der Heizelemente 13, 14 kann mit oder ohne Schattenblech 16, 17 vorgesehen sein.

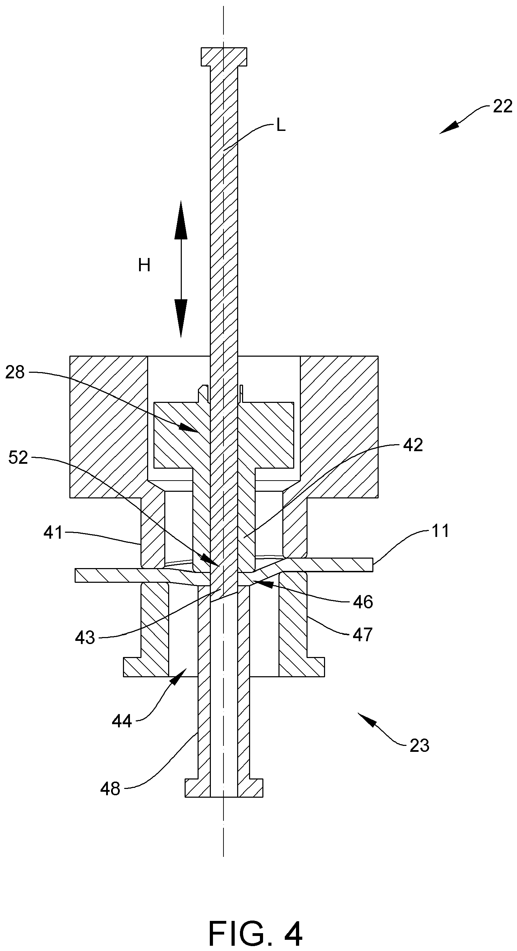

Die in Fig. 2 dargestellte Umformeinrichtung 20 umfasst einen Aufnahmerahmen 21, an dem ein Oberwerkzeug 22 und ein Unterwerkzeug 23 angeordnet sind, welche nachfolgend bezüglich Fig. 4 näher beschrieben werden. Zwischen dem Oberwerkzeug 22 und dem Unterwerkzeug 23 ist ein Bearbeitungsbereich gebildet, in dem das Bauteil 11 zum Bearbeiten angeordnet wird. Der Aufnahmerahmen 21 ist durch einen C-förmigen Rahmen gebildet.

Eine Antriebseinrichtung 24 steuert eine Hubbewegung des Oberwerkzeugs 22 und Unterwerkzeugs 23 entlang einer Hubrichtung H an. Durch die Hubbewegung des Oberwerkzeugs 22 und Unterwerkzeugs 23 wird das dazwischen angeordnete Bauteil 11 bearbeitet. Zum Begrenzen der Hubbewegung können ein oberer Anschlag 25 und ein unterer Anschlag 26 vorgesehen sein.

Die Antriebseinrichtung 24 ist durch einen pneumatischen Antrieb, durch einen hydraulischen Antrieb oder durch einen servo-elektrischen Antrieb gebildet.

Zudem umfasst die Umformeinrichtung 20 eine Stelleinrichtung 27, durch welche eine Stellbewegung einer nachfolgend näher beschriebenen Schneideinrichtung 28 angesteuert wird. Die Stelleinrichtung 27 umfasst ein Stellglied, beispielsweise einen pneumatischen, hydraulischen oder servo-elektrischen Stellzylinder.

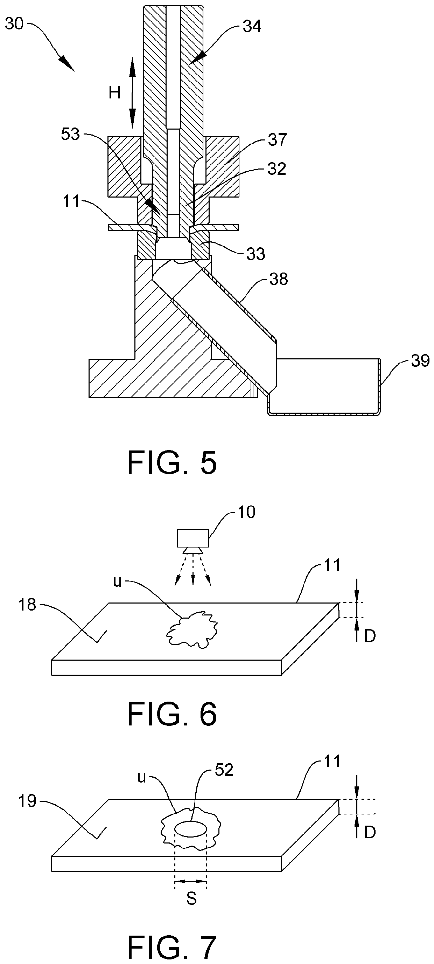

Die in Fig. 3 dargestellte Stanzeinrichtung 30 umfasst einen Aufnahmerahmen 31, an dem ein Stanzmesser 32 und eine Stanzmatrize 33 angeordnet sind, welche nachfolgend bezüglich Fig. 5 näher beschrieben werden. Zwischen dem Stanzmesser 32 und der Stanzmatrize 33 ist ein Stanzbereich gebildet, in dem das Bauteil 11 zum Bearbeiten angeordnet wird. Der Aufnahmerahmen 31 ist durch einen C-förmigen Rahmen gebildet.

Durch einen Stanzantrieb 34 wird eine Stanzbewegung des Stanzmessers 32 und der Stanzmatrize 33 entlang einer Stanzrichtung S angesteuert. Durch die Stanzbewegung des Stanzmessers 32 und der Stanzmatrize 33 wird in das dazwischen angeordnete Bauteil 11 ein Primärloch 53 eingebracht. Zum Begrenzen der Stanzbewegung können ein oberer Anschlag 35 und ein unterer Anschlag 36 vorgesehen sein.

Der Stanzantrieb 34 ist durch einen pneumatischen Antrieb, durch einen hydraulischen Antrieb oder durch einen servo-elektrischen Antrieb gebildet.

Fig. 4 zeigt eine schematische Schnittansicht des Oberwerkzeugs 22 und Unterwerkzeugs 23 der Umformeinrichtung 20 in Fig. 2.

Das Oberwerkzeug 22 umfasst einen Niederhalter 41, einen Formstempel 42 und ein Schneidelement 43 einer Schneideinrichtung 28.

Der Formstempel 42 ist durch einen im Wesentlichen zylindrischen Formungsgrundkörper gebildet. Der Formstempel 42 ist innerhalb eines Innenraums des Niederhalters 41 entlang dessen Längserstreckung aufgenommen. Der Niederhalter 41 und der Formstempel 42 sind in Hubrichtung H relativ zueinander bewegbar, so dass eine unabhängige Hubbewegung des Niederhalters 41 und des Formstempels 42 ansteuerbar ist.

Alternativ zu dem zylindrischen Formungsgrundkörper kann der Formstempel 42 durch einen Formungsgrundkörper ausgebildet sein, der einen ovalen oder einen mehreckigen Formungsquerschnitt aufweist. Der Niederhalter 41 kann einen zum Formstempel 42 korrespondierenden Querschnitt aufweisen.

Der Formstempel 42 weist einen Innenraum entlang dessen Längserstreckung auf, in dem das Schneidelement 43 der Schneideinrichtung 28 zum Teil aufgenommen ist. Das Schneidelement 43 ist mit dem Formstempel 42 gekoppelt, sodass das Schneidelement 43 und der Formstempel 42 eine gemeinsame Hubbewegung in Hubrichtung H ausführen.

Das Schneidelement 43 steht gegenüber einem Stempelboden 46 des Formstempels 42 in Richtung des zu bearbeitenden Bauteils 11 hervor.

Ebenso kann das Schneidelement 43 in dem Innenraum des Formstempels 42 geführt aufgenommen sein und durch eine Stelleinrichtung eine Schneidbewegung des Schneidelements 43 in Richtung des Bauteils 11 ansteuerbar sein.

Der Stempelboden 46 des Formstempels 42 ist in Bezug zu einer Orthogonalen zur Längsmittelachse L des Formstempels 42 geneigt angeordnet. Die Neigung des Stempelbodens 46 kann an eine Außenkontur des zu bearbeitenden Bauteils 11, beispielsweise einer Wölbung, Neigung oder Schräge des Bauteils 11, und/oder an eine auszubildende Geometrie der Umformung angepasst sein, wie nachfolgend noch näher ausgeführt wird.

Das Unterwerkzeug 23 umfasst eine zu dem Niederhalter 41 und dem Formstempel 42 korrespondierende Formmatrize 47 und ein zu dem Schneidelement 43 korrespondierendes Gegenschneidelement 48 der Schneideinrichtung 28.

Zum Bearbeiten des Bauteils 11 führt der Niederhalter 41 eine Hubbewegung in Richtung der Formmatrize 47 aus und das dazwischen angeordnete Bauteil 11 wird zwischen dem Niederhalter 41 und der Formmatrize 47 verspannt. Der Niederhalter 41 wird durch eine Kraftspeichereinrichtung, beispielsweise wenigstens ein Federelement, oder eine pneumatische, hydraulische oder servo-elektrische Einrichtung angesteuert.

Durch eine darauffolgende Hubbewegung des Formstempels 42 in Richtung der Formmatrize 47 wird das dazwischen angeordnete Bauteil 11 unter Beaufschlagung durch den Formstempel 42 und der Formmatrize 47 umgeformt.

Dadurch, dass das Schneidelement 43 gegenüber dem Stempelboden 46 des Formstempels 42 hervorsteht, wird durch die Hubbewegung des Formstempels 42 vor dem Umformen ein Sekundärloch 52 durch die Schneideinrichtung 28 in das Bauteil 11 eingebracht.

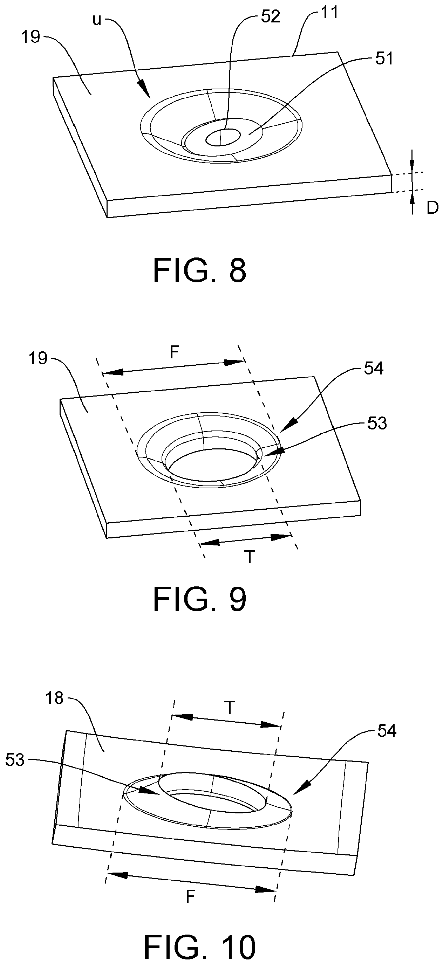

Das Schneidelement 43 ist in der Weise am Stempelboden 46 positioniert, dass das Sekundärloch 52 vor dem Umformen innerhalb einer Stempelanlagefläche 51 (siehe Fig. 8) in das Bauteil 11 eingebracht wird.

Wie in Fig. 4 dargestellt ist in radialer Richtung zwischen einem Außenumfang des Formstempels 42 und einem Innenumfang der Formmatrize 47 ein Abstand vorgesehen. Dadurch ist in radialer Richtung zwischen dem Formstempel 42 und der Formmatrize 47 ein Spalt gebildet.

Der Spalt bildet in einem Querschnitt orthogonal zur Längserstreckung des Formstempels 42 und der Formmatrize 47 eine kreisförmige Ringfläche zwischen dem Außenumfang des Formstempels 42 und dem Innenumfang der Formmatrize 47.

In Abhängigkeit von der Ausgestaltung des Formstempels 42 und/oder der Formmatrize 47 kann ebenso eine ovale Ringfläche oder eine mehreckige Ringfläche zwischen dem Außenumfang des Formstempels 42 und dem Innenumfang der Formmatrize 47 ausgebildet sein.

Der Formstempel 42 kann in der Weise zur Formmatrize 47 positioniert sein, dass die Ringfläche zwischen dem Formstempel 42 und der Formmatrize 47 konzentrisch oder exzentrisch zur Längsmittelachse L des Formstempels 42 vorgesehen sein.

Der Spalt kann eine Breite aufweisen die größer ist als eine Bauteildicke D im Umformbereich U des Bauteils 11. Vorteilhafterweise ist die Breite des Spalts in Abhängigkeit von einem Durchmesser des Primärlochs und/oder einer auszubildenden Geometrie der Umformung ausgebildet. Beispielsweise kann die Breite des Spalts in radialer Richtung zwischen einem Außenumfang des Formstempels 42 und einem Innenumfang der Formmatrize 47 als das 1,1 fache oder mehr der Bauteildicke D im Umformbereich U, bevorzugt als das 1,2 fache oder mehr der Bauteildicke D im Umformbereich U, besonders bevorzugt als das 1,5 fache oder mehr oder 2,0 fache oder mehr der Bauteildicke D im Umformbereich U ausgebildet sein.

Durch den Abstand zwischen dem Außenumfang des Formstempels 42 und dem Innenumfang der Formmatrize 47 ist ein Formungsbereich in dem dazwischen liegenden Spalt gebildet, in dem das Bauteil 11 plastisch verformt wird. Insbesondere wird durch den Abstand zwischen dem Außenumfang des Formstempels 42 und dem Innenumfang der Formmatrize 47 eine trichterförmige Umformung ausgebildet.

Fig. 5 ist eine schematische Schnittansicht der Stanzeinrichtung 30 in Fig. 3. Das Bearbeiten des Bauteils 11 durch die Stanzeinrichtung 30 erfolgt nach dem Einbringen des Sekundärlochs 52 in das Bauteil 11 und nach dem Ausbilden der Umformung. Durch die Stanzeinrichtung 30 wird ein Primärloch 53 in das Bauteil 11 eingebracht.

Die Stanzeinrichtung 30 kann in einer Bauteilebene relativ zum Bauteil 11 positionierbar sein, um eine Position des Primärlochs 53 relativ zur Umformung einzustellen.

Die Stanzeinrichtung 30 umfasst das Stanzmesser 32 und einen dem Stanzmesser 32 zugeordneten Stanzniederhalter 37 sowie die Stanzmatrize 33.

Diese sind zueinander ausgerichtet und einander gegenüberliegenden Seiten des zu bearbeitenden Bauteils 11 zugeordnet und durch eine Hubbewegung relativ zueinander bewegbar.

Zum Einbringen des Primärlochs 53 in das Bauteils 11 führt der Stanzniederhalter 37 eine Hubbewegung in Richtung der Stanzmatrize 33 aus und das dazwischen angeordnete Bauteil 11 wird zwischen dem Stanzniederhalter 37 und der Stanzmatrize 33 verspannt. Der Stanzniederhalter 37 wird durch eine Kraftspeichereinrichtung, beispielsweise wenigstens ein Federelement, oder eine pneumatische, hydraulische oder servo-elektrische Einrichtung angesteuert.

Durch eine darauffolgende Hubbewegung des Stanzmessers 32 in Richtung der Stanzmatrize 33 wird in das dazwischen angeordnete Bauteil 11 unter Beaufschlagung durch das Stanzmesser 32 und der Stanzmatrize 33 das Primärloch 53 in das Bauteil 11 eingebracht.

Das Stanzmesser 32 und die Stanzmatrize 33 bilden einen Stanzdurchmesser T, der größer ausgebildet ist als ein Schneiddurchmesser S der Schneideinrichtung 28 und kleiner ausgebildet ist als ein Formungsdurchmesser F der Formmatrize 47.

Die Stanzeinrichtung 30 umfasst eine Abführeinrichtung 38 mit einem Sammelbehälter 39 zum Abführen und Sammeln des durch den Stanzvorgang aus dem Bauteil 11 ausgestanzten Teils. Das ausgestanzte Teil kann ein nach dem Schneidvorgang durch die Schneideinrichtung 28 zumindest teilweise in dem Sekundärloch 52 verbliebenes Kernmaterial des Bauteils 11 umfassen, wie nachfolgend noch näher beschrieben wird.

Anhand der Fig. 6 bis 10 wird nachfolgend das offenbarungsgemäße Verfahren zum Bearbeiten des Bauteils 11 beschrieben.

Gemäß Fig. 6 wird in einem ersten Bearbeitungsschritt der Umformbereich U des Bauteils 11 durch die Heizeinrichtung 10 auf die Umformtemperatur erwärmt. Insbesondere wird durch das Heizelement 14 die Rückseite 18 des Bauteils 11 in dem Umformbereich U erwärmt.

Gemäß Fig. 7 wird in einem zweiten Bearbeitungsschritt durch die Schneideinrichtung 28 das Sekundärloch 52 innerhalb des Umformbereichs U in das Bauteil 11 eingebracht. Das Sekundärloch 52 wird bevorzugt von der Vorderseite 19 in das Bauteil 11 eingebracht. Das Sekundärloch 52 weist einen Durchmesser S auf.

Es kann vorgesehen sein, dass das ausgeschnittene Kernmaterial des Bauteils 11 nach dem Schneidvorgang durch die Schneideinrichtung 28 zumindest teilweise in dem Sekundärloch 52 verbleibt. Somit wird das Kernmaterial nach dem Schneidvorgang als Art Pfropfen in dem Sekundärloch 52 gehalten.

Gemäß Fig. 8 wird in einem dritten Bearbeitungsschritt durch die Umformeinrichtung 20 die Umformung in den Umformbereich U des Bauteils 11 eingebracht.

Hierzu setzt der Formstempel 42 mit dem Stempelboden 46 nur auf die das Sekundärloch 52 umgebende Stempelanlagefläche 51 auf.

Zwischen dem Außenumfang des Formstempels 42 und dem Innenumfang der Formmatrize 47 ist der Abstand in radialer Richtung vorgesehen, so dass zwischen dem Formstempel 42 und der Formmatrize 47 der Formungsbereich zum Ausbilden der Umformung gebildet ist. Das Bauteil 11 wird durch den Formstempel 42 und die Formmatrize 47 in der Weise plastisch verformt, dass sich die trichterförmige Umformung ausbildet, wie in Fig. 8 dargestellt.

Durch die Neigung des Stempelbodens 46 in Bezug zur Orthogonalen zur Längsmittelachse L des Formstempels 42 wird zudem eine leicht asymmetrisch trichterförmige Umformung ausgebildet. Bei dieser ist ein Bereich der Umformung tiefer in das Bauteil 11 eingeformt (der linke Bereich der Umformung in Fig. 8) als ein diesem gegenüberliegender Bereich der Umformung (der rechte Bereich der Umformung in Fig. 8). Dabei kann die Neigung des Stempelbodens 46 an eine Außenkontur des Bauteils 11, beispielsweise einer Wölbung, Neigung oder Schräge des Bauteils 11, im Umformbereich U angepasst sein. Zudem kann die Neigung des Stempelbodens 46 in Abhängigkeit von der auszubildenden Geometrie der Umformung angepasst sein.

Nach dem Ausbilden der Umformung und vor dem Ausbilden des Primärlochs 53 kann eine Kühlung des Bauteils 11, vorzugsweise zumindest des Umformbereichs U, durch eine Kühleinrichtung vorgesehen sein. Die Kühlung kann bevorzugt durch einen Kühlluftstrom erfolgen.

Gemäß Fig. 9 wird in einem vierten Bearbeitungsschritt durch die Stanzeinrichtung 30 das Primärloch 53 in das Bauteil 11 eingebracht.

Insbesondere wird durch das Ausbilden des Primärlochs 53 mit dem vorgesehenen Stanzdurchmesser T zumindest die Stempelanlagefläche 51 und das Sekundärloch 52 am Bauteil 11 ausgestanzt. Bevorzugt wird durch das Ausbilden des Primärlochs 53 mit dem vorgesehenen Stanzdurchmesser T die Stempelanlagefläche 51, das Sekundärloch 52 und teilweise die trichterförmige Umformung in einem Innenumfangsbereich ausgestanzt.

Auf diese Weise wird, wie in Fig. 9 dargestellt, eine Aufnahme 54 ausgebildet, die durch das Primärloch 53 in Form eines Durchgangslochs und der das Primärloch 53 umgebenden trichterförmigen Umformung gebildet ist. Diese Aufnahme 54 ist insbesondere vorgesehen, um in dieser ein Bauelement anzuordnen.

Fig. 10 zeigt die Rückseite 18 des Bauteils 11, wobei sich die Umformung auf der Rückseite 18 in Abhängigkeit von der Eindringtiefe des Formstempels 42 in das Bauteil 11 als eine entsprechende Auswölbung ausgestaltet.

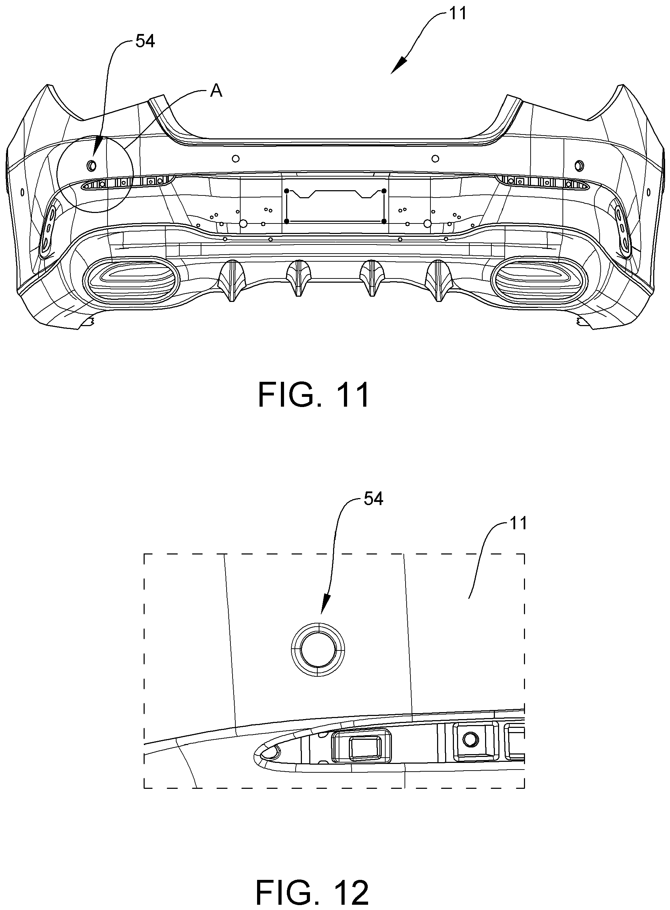

Fig. 11 zeigt das zu bearbeitende Bauteil 11 in einer exemplarischen Ausführungsform. Bei dem Bauteil 11 kann es sich insbesondere um einen Stoßfänger oder ein anderes Karosserieelement für ein Kraftfahrzeug handeln.

Bei dem Stoßfänger ist die Aufnahme 54 vorgesehen, um in dieser ein Bauelement anzuordnen. Ein solches Bauelement kann beispielsweise ein Sensorelement sein, zum Beispiel ein Sensorelement einer elektronischen Einparkhilfe (PDC) eines Kraftfahrzeugs. Insbesondere in einem Wölbungsbereich des Stoßfängers kann ein solches Bauelement präzise ausgerichtet und bündig in der Aufnahme 54 aufgenommen werden.

Das Bauteil 11 ist jedoch nicht auf ein Karosserieelement für ein Kraftfahrzeug beschränkt. Ebenso kann das Bauteil 11 für einen anderen Anwendungsbereich ausgebildet sein. Insbesondere ist das Bauteil 11 durch einen sich zumindest bereichsweise flächig erstreckenden Grundkörper gebildet. Das Bauteil 11 weist bevorzugt eine größere Längserstreckung als Bauteildicke D auf. Das Bauteil 11 kann in dem Umformbereich U Wölbungen, Neigungen, Schrägen, Knicke, Sicken und/oder Kanten aufweisen.

Insbesondere ist das Bauteil 11 zumindest teilweise aus einem Kunststoffmaterial ausgebildet.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Vorrichtung zum Bearbeiten von Bauteilen (11), vorzugsweise Bauteile (11), die zumindest teilweise aus einem Kunststoffmaterial ausgebildet sind, aufweisend einen Formstempel (42) und eine Formmatrize (47), die zueinander ausgerichtet sind und jeweils einander gegenüberliegenden Seiten des zu bearbeitenden Bauteils (11) zugeordnet sind, und die durch eine Hubbewegung des Formstempels (42) und/oder der Formmatrize (47) relativ zueinander bewegbar sind, wodurch das dazwischen angeordnete Bauteil (11) in einem Umformbereich (U) unter Beaufschlagung durch den Formstempel (42) und der Formmatrize (47) umformbar ist, **dadurch gekennzeichnet, dass** eine Schneideinrichtung (28) mit wenigstens einem Schneidelement (43) vorgesehen ist, die eingerichtet ist, vor dem Ausbilden der Umformung ein Sekundärloch (52) innerhalb des Umformbereichs (U) in das Bauteil (11) einzubringen.

2. Vorrichtung nach Anspruch 1, bei der ferner das Schneidelement (43) zum Ausbilden des Sekundärlochs (52) gegenüber einem Stempelboden (46) des Formstempels (42) oder gegenüber der Formmatrize (47) in Richtung des zu bearbeitenden Bauteils (11) hervorsteht.

3. Vorrichtung nach Anspruch 1 oder 2, bei der ferner zumindest das Schneidelement (43) der Schneideinrichtung (28) mit dem Formstempel (42) oder der Formmatrize (47) gekoppelt ist oder integral mit dem Formstempel (42) oder der Formmatrize (47) ausgebildet ist.

4. Vorrichtung nach einem der vorhergehenden Ansprüche, bei der ferner die Schneideinrichtung (28) ein Gegenschneidelement (48) aufweist, wobei das Gegenschneidelement (48) und das Schneidelement (43) zueinander ausgerichtet sind und jeweils einander gegenüberliegenden Seiten des zu bearbeitenden Bauteils (11) zugeordnet sind und durch eine Stellbewegung relativ zueinander bewegbar sind, wodurch das Sekundärloch (52) unter Beaufschlagung durch das Schneidelement (43) und das Gegenschneidelement (48) in das dazwischen angeordnete Bauteil (11) einbringbar ist.

5. Vorrichtung nach einem der vorhergehenden Ansprüche, bei der ferner die Schneideinrichtung (28) eine Stelleinrichtung umfasst, durch die eine Stellbewegung des Schneidelements (43) und/oder des Gegenschneidelements (48) in Richtung des zu bearbeitenden Bauteils (11) ansteuerbar ist.

6. Vorrichtung nach einem der vorhergehenden Ansprüche, bei der ferner die Schneideinrichtung (28) zumindest teilweise innerhalb des Formstempels (42) und/oder der Formmatrize (47) angeordnet ist.

7. Vorrichtung nach einem der vorhergehenden Ansprüche, bei der ferner zwischen einem Außenumfang des Formstempels (42) und einem Innenumfang der Formmatrize (47) ein radialer Abstand vorgesehen ist, durch welchen ein Formungsbereich zwischen dem Formstempel (42) und der Formmatrize (47) gebildet ist, in dem eine trichterförmige Umformung in dem Bauteil (11) ausbildbar ist.

8. Vorrichtung nach einem der vorhergehenden Ansprüche, bei der ferner der Stempelboden (46) des Formstempels (42) in Bezug zu einer Orthogonalen zu einer Längsmittelachse (L) des Formstempels (42) geneigt angeordnet ist.

9. Vorrichtung nach einem der vorhergehenden Ansprüche, bei der ferner eine Längsmittelachse (L) des Formstempels (42) und eine Längsmittelachse (L) der Formmatrize (47) versetzt zueinander und/oder geneigt zueinander ausgerichtet sind.

10. Vorrichtung nach einem der vorhergehenden Ansprüche, bei der ferner ein Hubweg der Hubbewegung des Formstempels (42) und/oder der Formmatrize (47) in Abhängigkeit von einer auszubildenden Geometrie der trichterförmigen Umformung angepasst ist.

11. Vorrichtung nach einem der vorhergehenden Ansprüche, bei der ferner eine Stanzeinrichtung (30) mit wenigstens einem Stanzmesser (32) vorgesehen ist, die eingerichtet ist, nach dem Ausbilden der Umformung ein Primärloch (53) innerhalb des Umformbereichs (U) in das Bauteil (11) einzubringen, wobei ein Stanzdurchmesser (T) der Stanzeinrichtung (30) größer ausgebildet ist als ein Schneiddurchmesser (S) der Schneideinrichtung (28) und kleiner ausgebildet ist als ein Formungsdurchmesser (F) der Formmatrize (47).

12. Verfahren zum Bearbeiten von Bauteilen (11), vorzugsweise Bauteile (11), die zumindest teilweise aus einem Kunststoffmaterial ausgebildet sind, aufweisend die Schritte:
- Erwärmen zumindest eines Umformbereichs (U) des Bauteils (11) auf eine Umformtemperatur,
- Einbringen eines Sekundärlochs (52) innerhalb des Umformbereichs (U) in das Bauteil (11),
- Ausbilden einer Umformung im Umformbereich (U), indem ein Formstempel (42) und eine Formmatrize (47) durch eine Hubbewegung relativ zueinander bewegt werden und ein Stempelboden (46) des Formstempels (42) nur auf eine das Sekundärloch (52) zumindest bereichsweise umgebende Stempelanlagefläche (51) aufgesetzt wird, und das dazwischen angeordnete Bauteil (11) unter Beaufschlagung durch den Formstempel (42) und die Formmatrize (47) umgeformt wird,
- nach dem Umformen Einbringen eines Primärlochs (53) in das Bauteil (11) innerhalb des Umformbereichs (U), wobei ein Durchmesser des Primärlochs (53) größer ausgebildet wird als ein Durchmesser des Sekundärlochs (52) und kleiner als ein Formungsdurchmesser (F) der Formmatrize (47).

13. Verfahren nach Anspruch 12, bei dem ferner die Umformung durch einen radialen Abstand zwischen dem Formstempel (42) und der Formmatrize (47) als eine trichterförmige Umformung in einem die Stempelanlagefläche (51) umgebenden Formungsbereich ausgebildet wird.

14. Verfahren nach Anspruch 12 oder 13, bei dem ferner der Formstempel (42) zum Ausbilden der Umformung mit einer Eindringtiefe in das Bauteil (11) eingebracht wird, die in Abhängigkeit von einer auszubildenden Geometrie der trichterförmigen Umformung angepasst wird.

15. Bauteil (11), vorzugsweise Bauteil (11), das zumindest teilweise aus einem Kunststoffmaterial ausgebildet ist, **dadurch gekennzeichnet, dass** das Bauteil (11) gemäß dem Verfahren nach einem der Ansprüche 12 bis 14 ausgebildet ist.
